# EUROPEAN PATENT APPLICATION

(11) **EP 2 073 121 A2**
(43) Date of publication of application: **24.06.2009**
(21) Application number: 08019424.4
(22) Date of filing: 06.11.2008
(51) Int. Cl.: G06F 11/07

(54) **Analyzer and analyzing system, and computer program product**

(30) Priority: 12.11.2007 JP 2007293060
(71) Applicant: Sysmex Corporation, Kobe-shi, Hyogo 651-0073 (JP)
(72) Inventor: Koeda, Noriaki, Kobe-shi, Hyogo 651-0073 (JP); Kageyama, Keisuke, Osaka-shi, Osaka 550-0011 (JP)
(74) Representative: HOFFMANN EITLE

(57) **Abstract**

An analyzer for accepting an operation input of a user and analyzing an object includes a measuring section for measuring the object; and a controller, wherein the controller includes a memory under control of a processor, the memory storing instructions enabling the processor to carry out operations, comprising: (a) storing information related to a position stored with information related to an operation history of the user; (b) storing information related to a position stored with information related to failure; (c) storing the information related to the operation history of the user; and (d) storing the information related to the failure of the analyzer. A sample analyzing system and computer program product are also disclosed.

## Description

### FIELD OF THE INVENTION

The present invention relates to an analyzer capable of outputting sufficient information necessary in reproducing the situation in which failure occurred in order to resolve the occurred failure, an analyzing system, and a computer program product.

### BACKGROUND

In analyzers for measuring and analyzing concentration, particle diameter, particle diameter distribution, and the like of formed particles floating in the aqueous solution, various failures occur during use. For instance, operation abnormality due to that the user performs the wrong operation, operation abnormality by the occurrence of failure of the hardware itself in the analyzer, and the like.

When the failure occurs, it is important to return to the normal state at an early stage. In US Patent Publication No. 5970425, unique information is collected from a chromatographic unit corresponding to an analyzer, failure analysis information file including user name, analyzed date and time, analyzing condition, and the like is created, and provided to identify the cause of failure. In US Patent Publication No. 5970425, information related to failure can be accurately and rapidly acquired without manual procedures, and the failure can be accurately responded.

Japanese Laid-Open Patent Publication No. JP 2005-321200 discloses an equipment analyzing data management device for storing operation log, chromatogram data, analyzing condition data, and analyzing process condition data in one aggregate. In Japanese Laid-Open Patent Publication No. JP 2005-321200, the temporal continuity of all the operation history related to analysis is ensured, the temporal correspondence relation with the chromatogram data and the like obtained by analysis is clearly understood, and high security can be achieved.

In identifying the cause of failure, it goes without saying that reproducing the occurred failure with a different but an equivalent analyzer is the shorter way to solution. However, in US Patent Publication No. 5970425, although the information necessary in identifying the cause of failure is collected, the information related to the operation up to the failure is missing, and thus the state in which the failure occurred cannot be reproduced.

In Japanese Laid-Open Patent Publication No. JP 2005-321200, since the operation log is stored, it appears at first as if the failure can be reproduced. However, the occurred failure may not be caused only by the user operation, and may be caused by change over time of the hardware, initial defect, and the like. In Japanese Laid-Open Patent Publication No. JP 2005-321200, if failures other than the failures caused by the user operation occur, such cause cannot be identified. Therefore, all failures cannot be reliably reproduced. The problems are not resolved even if the collected information is stored together in US Patent Publication No. 5970425.

### SUMMARY OF THE INVENTION

The scope of the present invention is defined solely by the appended claims, and is not affected to any degree by the statements within this summary.

A first aspect of the present invention is an analyzer for accepting an operation input of a user and analyzing an object, comprising: a measuring section for measuring the object; and a controller, wherein the controller includes a memory under control of a processor, the memory storing instructions enabling the processor to carry out operations, comprising: (a) storing information related to a position to which information related to an operation history of the user is stored; (b) storing information related to a position to which information related to failure is stored; (c) storing the information related to the operation history of the user; and (d) storing the information related to the failure of the analyzer.

A second aspect of the present invention is an analyzing system comprising: an analyzers for accepting an operation of a user and analyzing an object; and a computer system; wherein the analyzer and the computer system are connected enabling data communication; and the respective analyzer comprises: a controller including a memory under control of a processor, the memory storing instructions enabling the processor to carry out operations, comprising: (a) storing information related to a position to which information related to an operation history of the user is stored; (b) storing information related to a position to which information related to failure is stored; (c) storing the information related to the operation history of the user; (d) storing the information related to the failure of the analyzer; and (e) transmitting the information stored in (c) and (d) to the computer system.

A third aspect of the present invention is a computer program product executable on an analyzer for accepting an operation input of a user and analyzing an object, comprising: a computer readable medium; and instructions, on the computer readable medium, adapted to enable a general purpose computer to perform operations, comprising: (a) storing information related to a position to which information related to an operation history of the user is stored; (b) storing information related to a position to which information related to failure is stored; (c) storing the information related to the operation history of the user; and (d) storing the information related to the failure of the analyzer.

### BRIEF DESCRIPTION OF THE DRAWINGS

Fig. 1 is a block diagram showing a configuration of an analyzer according to a first embodiment of the present invention;
Fig. 2 is a flowchart showing a processing procedure of a control device of the analyzer according to the first embodiment of the present invention;
Fig. 3 is an illustrative view of a data configuration of the information related to operation history stored in an operation history information storage unit;
Fig. 4 is an illustrative view of a data configuration of the failure occurrence information stored in a failure information storage unit as information related to the failure unique to the analyzer;
Fig. 5 is an illustrative view of a data configuration of the information related to the position stored in advance in a position information storage unit;
Fig. 6 is an illustrative view of a data configuration of the authority information stored in an authority information storage unit;
Fig. 7 is an illustrative view of a data configuration of the information related to measurement result stored in a measurement result information storage unit;
Fig. 8 is a flowchart showing a processing procedure of the control device of the analyzer according to the first embodiment of the present invention when generating aggregate information;
Fig. 9 is a block diagram showing a configuration of an analyzing system according to a second embodiment of the present invention;
Fig. 10 is a flowchart showing a processing procedure of a control device of the analyzer in the analyzing system according to the second embodiment of the present invention;
Fig. 11 is a flowchart showing a processing procedure of the control device of the analyzer according to the second embodiment of the present invention when generating aggregate information; and
Fig. 12 is a flowchart showing a processing procedure for collecting aggregate information of the control device of the central unit in the analyzing system according to the second embodiment of the present invention.

### DETAILED DESCRIPTION OF THE PREFERRED EMBODIMENTS

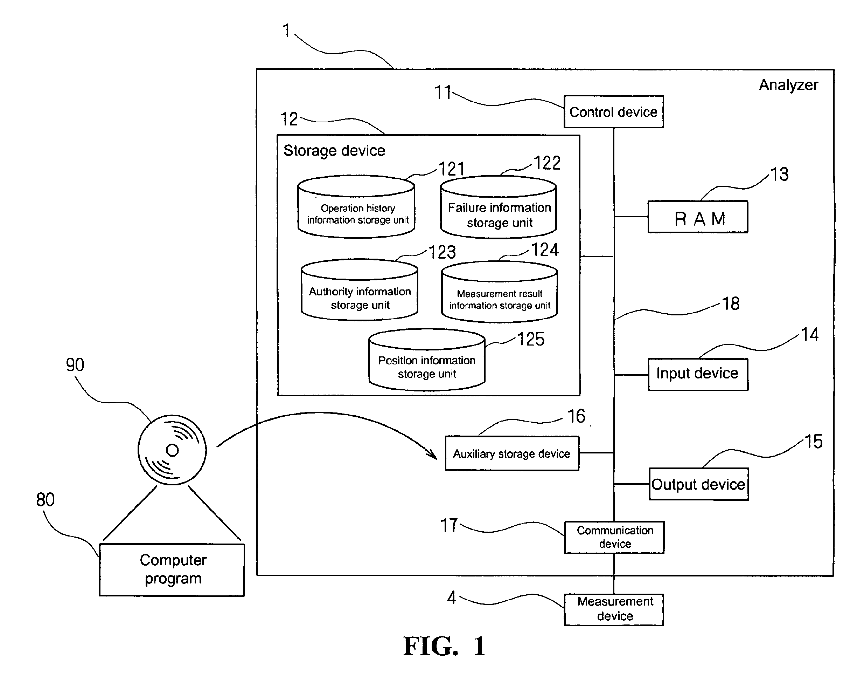

The preferred embodiments of the present invention will be described hereinafter with reference to the drawings.
An analyzer according to a first embodiment of the present invention will be specifically described based on the drawings. Fig. 1 is a block diagram showing a configuration of the analyzer according to the first embodiment of the present invention. In Fig. 1, the analyzer according to the first embodiment is configured by at least a CPU (Central Processing Unit), a control device 11 configured by LSI and the like, a storage device 12, a RAM 13, an input device 14, an output device 15, an auxiliary storage device 16, a communication device 17, and an internal bus 18 connecting such hardware. The control device 11 is connected to each hardware, as described above, of the analyzer 1 by way of the internal bus 18, and controls the operation of each hardware and executes various software functions according to a computer program 80 stored in the storage device 12. The RAM 13 is configured by SRAM, flash memory, and the like, wherein a load module is developed when executing the computer program 80, and the RAM 13 stores temporary data and the like generated when executing the computer program 80.

The storage device 12 is configured by a built-in fixed storage device (hard disc), ROM and the like. The computer program 80 stored in the storage device 12 is downloaded by the auxiliary storage device 16 from a portable recording medium 90 such as DVD and CD-ROM recorded with programs and information such as data, and is developed from the storage device 12 to the RAM 13 and executed in time of execution. The computer program may be one downloaded from an external computer via the communication device 17.

The storage device 12 includes an operation history information storage unit 121, a failure information storage unit 122, an authority information storage unit 123, a measurement result information storage unit 124, and a position information storage unit 125. The operation history information storage unit 121 stores information related to the operation history on the analyzer 1 made by the user. Specifically, the information not only includes physical operation such as button operation and switch operation by the user, but also operation history such as clicking, dragging, and double clicking by an input medium such as a mouse through a screen interface.

The failure information storage unit 122 stores information related to the failure of the analyzer 1 itself such as whether or not the failure occurred in the hardware itself of the analyzer 1, and if the failure occurred, at which site and what kind of failure occurred. For instance, information related to the history that an interruption process occurred by the disc failure and the hardware failure such as memory overflow and the operation mistake by the user is not the cause, and the information related to the history that an error process occurred by the failure of the software processing are stored.

The authority information storage unit 123 stores information related to access authority of the user. Specifically, the information includes not only user ID information and password information to log in, but also access authority information on a plurality of processing given to each user ID.

The measurement result information storage unit 124 stores information related to the measurement result which is the measurement result on an object carried out by the measurement device 4 under predetermined conditions. The information related to the measurement result is not only measurement values, and but also includes information related to the measuring object, information related to the measuring conditions at the point of measurement, and the like.

The position information storage unit 125 stores information related to a position where the information necessary for reproducing the failure are stored. The information related to the stored position may be a physical address of the hard disc and the like, or may be a logical address of the pointer information and the like. The information may also be a file name, a folder name, and the like in a file system, and is normally uniquely identified. The information may be identified in an execution program, generated in the execution and stored in the position information storage unit 125.

The communication device 17 is connected to the internal bus 18, and is able to transmit and receive data with the external computer and the like by connecting to an external network such as Internet, LAN, and WAN. In other words, the storage device 12 as described above is not limited to a configuration built in the analyzer 1, and may be an external recording medium such as hard disc installed in an external server computer and the like connected by way of the communication device 17. The measurement device 4 which acquires measurement data of the analyzing object may be connected by way of the communication device 17 to be able to transmit and receive data.

The input device 14 has a broad meaning of including the entire device for acquiring information from the analyzing object and the like, in addition to the data input medium such as keyboard and mouse. The output device 15 refers to a display device such as CRT monitor and LCD, or a printing device such as laser printer and dot printer.

The type of analyzer is not particularly limited, and may be of any type as long as it is an apparatus capable of measuring and analyzing the component of a sample. The analyzer may be an analyzer for measuring and analyzing the concentration, the particle diameter, the particle diameter distribution, and the like of the formed particle floating in the aqueous solution.

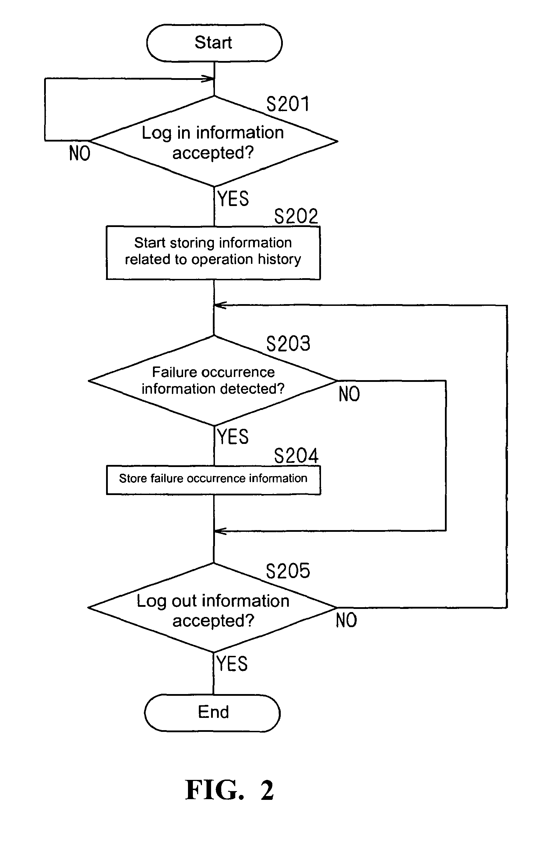

The flow of processing of the analyzer 1 configured as above will be described. Fig. 2 is a flowchart showing processing procedures of the control device 11 of the analyzer 1 according to the first embodiment of the present invention. The analyzer 1 stores, in advance, information related to the position of storing various information in the position information storage unit 125, and the control device 11 of the analyzer 1 judges whether or not log in information of the user is accepted from the input device 14 (step S201). The control device 11 is in the standby state until judged that the log in information is accepted (step S201: NO), and if the control device 11 judges that the log in information is accepted (step S201: YES), the control device 11 starts to store information related to the operation history operated by the user through the input device 14 in the operation history information storage unit 121 of the storage device 12 (step S202).

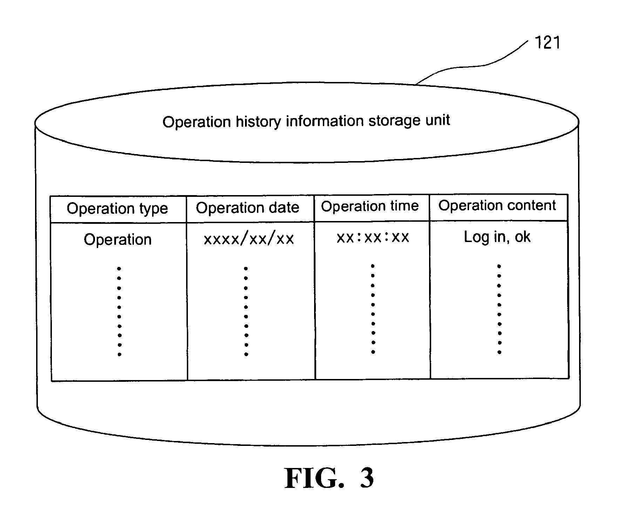

Fig. 3 is an illustrative view of a data configuration of the information related to the operation history stored in the operation history information storage unit 121. As shown in Fig. 3, the operation history from the user logs in to the user logs out is stored as operation type, operation date, operation time, and content of operation. The operation history may be stored in correspondence to the user ID, which is information identifying the user who made the operation. The information related to the operation history then can be acquired for every user, and from whose operation the failure occurred can be known.

The period of storing the operation history is not limited to the period from log in to log out, and all the operation history may be stored if the power of the analyzer 1 is turned ON, or the period from a predetermined time to a predetermined time may be arbitrarily set. The failure that has occurred due to that the past operation is not normally completed, for example, that the RAM 13 is not opened may be reproduced.

Returning to Fig. 2, the control device 11 judges whether or not the failure occurrence information indicating that some kind of failure occurred in the analyzer 1 itself is detected (step S203). Various failure occurrence information is acquired as the information related to the failure. Specifically, judgment is made on whether or not activation of the interruption program that starts the processing when the failure occurred in the hardware provided in the analyzer 1, or the error processing program by the software failure is detected. If the control device 11 judges that the failure occurrence information is detected (step S203: YES), the control device 11 stores the detected failure occurrence information in the failure information storage unit 122 of the storage device 12 (step S204).

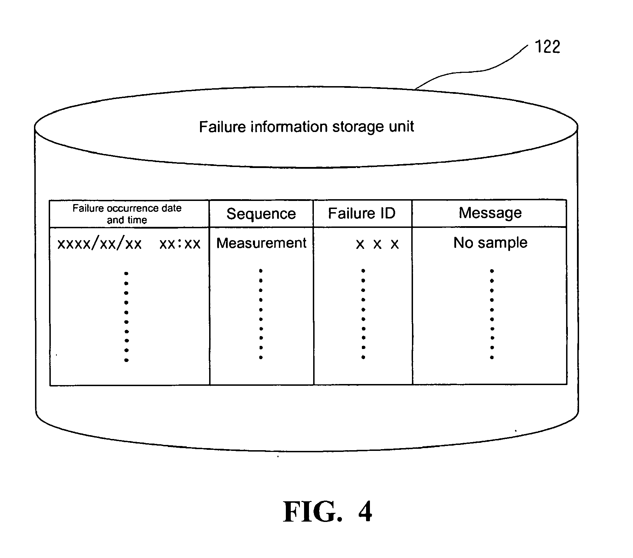

Fig. 4 is an illustrative view of a data configuration of the failure occurrence information stored in the failure information storage unit 122 as the information related to the failure unique to the analyzer 1. As shown in Fig. 4, when the failure occurred in the process (sequence) is stored as the failure occurrence information. The type of failure is classified by the failure ID, which is information identifying the failure, and is stored in correspondence to an error message output by the interruption program. Thus, the cause of failure if the failure unique to the hardware such as hardware failure and software failure occurred or the notification that the failure has not occurred if the failure has not occurred can be known.

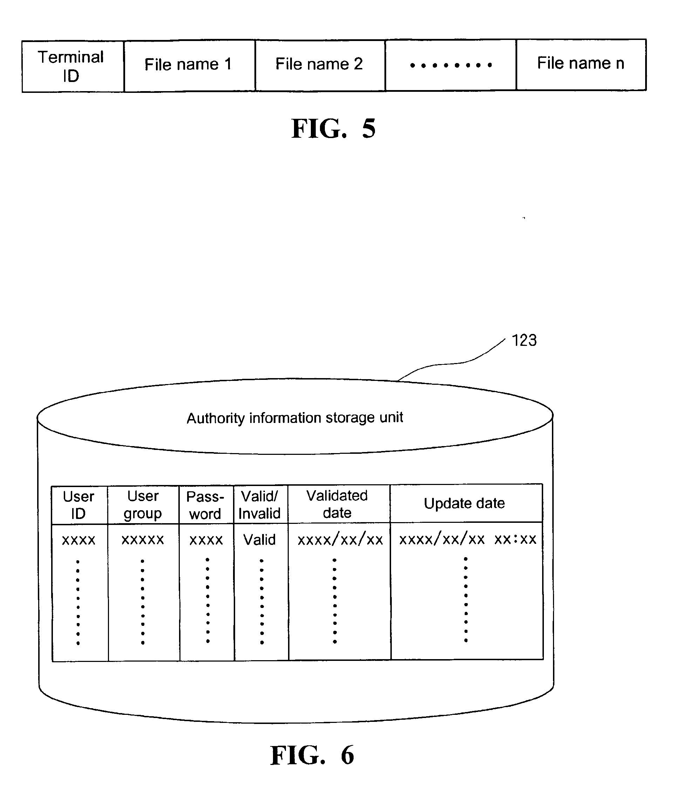

Fig. 5 is an illustrative view of a data configuration of the information related to the position stored in advance in the position information storage unit 125. As shown in Fig. 5, file name 1, file name 2, ..., file name n in which n (n is natural number) information necessary for reproducing the failure is stored are stored as information related to the position in correspondence to a terminal ID, which is information identifying which analyzer (not indispensable). Normally, it is statically set as the source code of the executing program or as definition information of the database, but may be dynamically generated and updated.

The operation history information and the failure occurrence information of required minimum for reproducing the state of the failure can be reliably collected using the information related to the position by storing the information related to the stored position. Therefore, even if the failure occurs at the shipping destination of the analyzer, the collection of information necessary for reproducing the state of the failure to resolve the failure does not require work skill. Thus, even the user at the site can easily and reliably collect the necessary information.

The information related to the position is not limited to the file name identifying the file, the folder name identifying the folder, and the like, and may be pointer information indicating address. For instance, an icon and the like linked with the readout application of the file and the like is displayed and output on the output device (display device) 15, so that the information stored at the position instructed by the information related to the position can be output, transmitted, and the like to the outside by double clicking the icon with the input device 14 such as a mouse.

Returning to Fig. 2, the control device 11 skips step S204 and advances the process to step S205 if the control device 11 judges that the failure occurrence information is not detected (step S203: NO).

The control device 11 judges whether or not the log out information of the user is accepted from the input device 14 (step S205). If the control device 11 judges that the log out information is not accepted (step S205: NO), the control device 11 returns the process to step S203 and repeats the above process. The control device 11 terminates the process if judging that the log out information is accepted (step S205: YES).

The information for reproducing the state in which the failure occurred is not limited to the operation history information and the failure occurrence information. For instance, authority information is necessary to reproduce the failure such as operation defect that occurs when the user whose access authority is not justified logs in and performs the operation. Therefore, the information related to the position stored with the authority information is stored in the position information storage unit 125 in advance, and the authority information is stored in the authority information storage unit 123 of the storage device 12.

Fig. 6 is an illustrative view of a data configuration of the authority information stored in the authority information storage unit 123. As shown in Fig. 6, whether or not the password and the user ID are valid, the validated date, the update date and the like are stored as the authority information in correspondence to the user ID identifying the user who logs in. Furthermore, the range of process executable according to the user ID can be identified by storing in correspondence to the user group whose access authority of the process is defined, which is useful in identifying the cause when the failure based on the access authority occurs.

When the state in which the failure occurred is reproduced, information related to the measurement result which is the result itself measured for the object in the measurement device 4 under a predetermined condition to check whether or not the measurement conditions match, may be stored. The information related to the position stored with the information related to the measurement result may be stored in the position information storage unit 125 in advance, and the information related to the measurement result may be stored in the measurement result information storage unit 124 of the storage device 12 for every measurement.

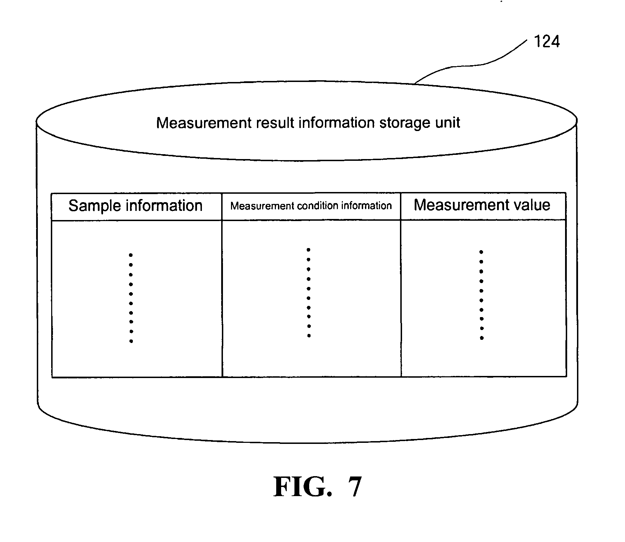

Fig. 7 is an illustrative view of a data configuration of the information related to the measurement result stored in the measurement result information storage unit 124. As shown in Fig. 7, as the information related to the measurement result, the actual measurement value is stored in correspondence to the sample information related to the sample to be analyzed and the measurement condition information related to the measurement condition. When the state in which the failure occurred is reproduced, judgment may be made that the state cannot be accurately reproduced if a large difference is created in the measurement value itself, and the check on the reproducibility of the state can be carried out.

With respect to the authority information and the information related to the measurement result as well, the authority information and the information related to the measurement result necessary for reproducing the state of the failure may be reliably collected using the information related to the position by storing the information related to the stored position. Therefore, even if the failure occurs at the shipping destination of the analyzer, the collection of information necessary for reproducing the state of the failure to resolve the failure does not require work skill. Thus, even the user at the site can easily and reliably collect the necessary information.

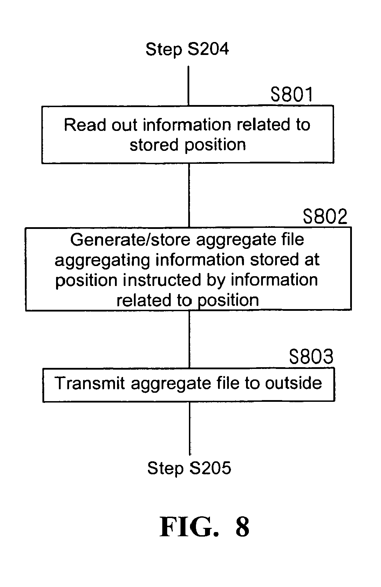

The plurality of information instructed by the information related to the stored position may be intensively stored as one aggregate information. Fig. 8 is a flowchart showing processing procedures of the control device 11 of the analyzer 1 according to the first embodiment of the present invention. Same reference numbers are denoted for the processes common with Fig. 2, and the detailed description will be omitted.

In Fig. 8, the control device 11 of the analyzer 1 reads out the information related to the position stored in the position information storage unit 125 after the process of step S204 (step S801), copies and aggregates each information stored at the instructed position, and then generates one aggregate file and stores the same in the storage device 12 (step S802). The control device 11 transmits the stored aggregate file to the external computer and the like through the communication device 17 (step S803), and returns the process to step S205.

Similar to mirroring, by separately generating the aggregate file, the operation and the like having a high possibility of being the cause that triggers the failure can be identified even if the hardware failure occurs. With one aggregate file, the backup of the information necessary for reproducing the failure can be acquired by copying to an external portable recording medium through the auxiliary storage device 16.

Furthermore, by transmitting the aggregate file to the external computer through the communication device 17, the operation and the like having a high possibility of being the cause that triggers the failure can be identified based on the backup file acquired in the past and saved in the external computer even if the information necessary for reproducing the failure in the storage device 12 such as the hard disc failure cannot be acquired.

The timing of generating the aggregate information is not limited to the time point where the failure occurred, and may be at an arbitrary time point of accepting the instructing information by the user through the input device 14. The aggregate information then can be acquired as backup before the hardware failure occurs in the analyzer 1, and the operation history information, the information related to the failure and the like collected beforehand are analyzed to estimate the cause that triggered the hardware failure.

The analyzer 1 of the first embodiment may be integral, or may be configured by the measurement device 4 for acquiring the measurement value of the analyzing object, and the analyzer 1 for analyzing the measurement value, the respective devices being connected so as to be able to transmit or receive data.

### (Second embodiment)

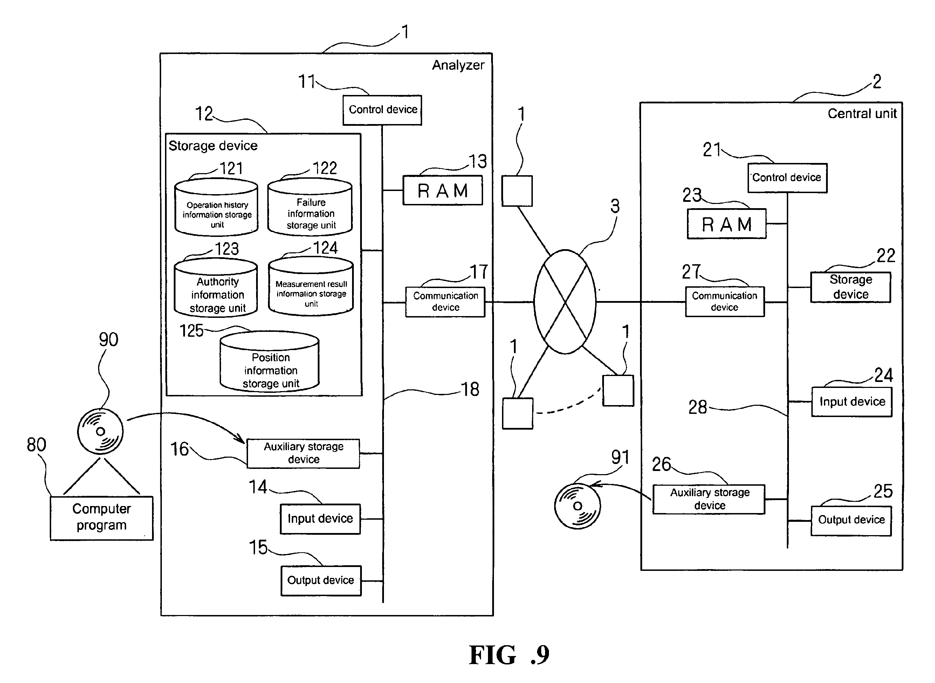

Fig. 9 is a block diagram showing a configuration of an analyzing system according to a second embodiment of the present invention. In Fig. 9, the analyzing system according to the second embodiment has the central unit 2 and a plurality of analyzers 1, 1, ... connected by way of the network 3 so as to be able to transmit and receive data. The configuration of the analyzer 1 is similar to the first embodiment, and thus the same reference numerals are denoted and the more detailed description can be omitted.

The central unit 2 is configured by at least a control device 21 configured by a CPU (Central Processing Unit), a LSI, and the like, a storage device 22, a RAM 23, an input device 24, an output device 25, an auxiliary storage device 26, a communication device 27, and an internal bus 28 connecting the above-described hardware. The control device 21 is connected to each unit of the hardware described above of the central unit 2 by way of the internal bus 28, and controls the operation of each unit of the hardware and executes various software functions according to a computer program stored in the storage device 22. The RAM 23 is configured by the SRAM, the flash memory and the like, wherein the load module is developed in execution of the computer program, and stores the temporary data and the like generated in the execution of the computer program.

The storage device 22 is configured by a built-in fixed storage device (hard disc), ROM and the like. The computer program stored in the storage device 22 is downloaded by the auxiliary storage device 26 from a portable recording medium such as DVD and CD-ROM recorded with programs and information such as data, and developed from the storage device 22 to the RAM 23 in time of execution, and then executed. The computer program may be a computer program downloaded from an external computer through the communication device 27.

The communication device 27 is connected to the internal bus 28, and is able to transmit and receive data with the plurality of analyzers 1, 1, ..., the external computer and the like by connecting to an external network 3 such as Internet, LAN, and WAN.

The input device 24 refers to data input medium such as keyboard and mouse. The output device 25 refers to a display device such as CRT monitor and LCD, or a printing device such as laser printer and dot printer.

Similar to the first embodiment, the type of analyzer 1 is not particularly limited, and may be of any type as long as it is an apparatus capable of measuring and analyzing the component of a sample. The analyzer may be an analyzer for measuring and analyzing the concentration, the particle diameter, the particle diameter distribution, and the like of the formed particle floating in the aqueous solution.

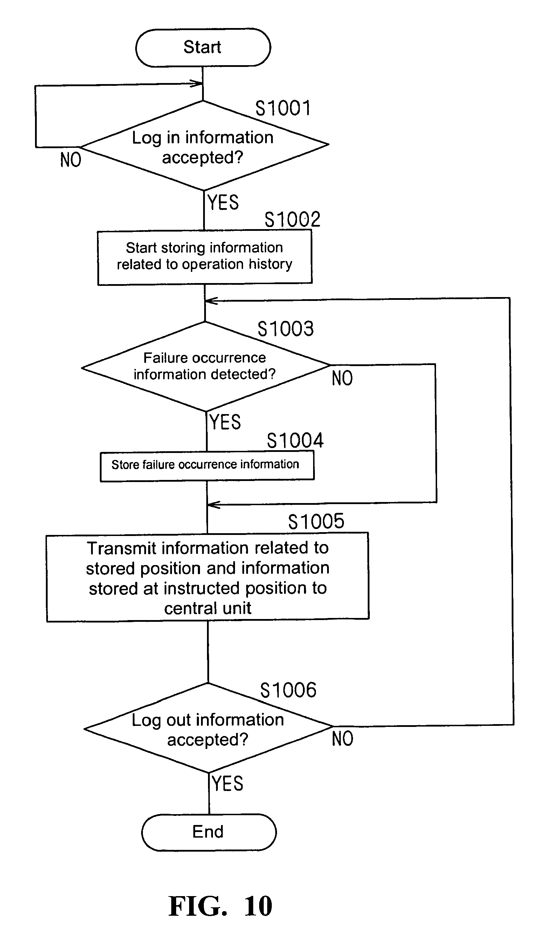

The flow of processing of the analyzing system configured as above will now be described. Fig. 10 is a flowchart showing processing procedures of the control device 11 of the analyzer 1 in the analyzing system according to the second embodiment of the present invention. The control device 11 of the analyzer 1 judges whether or not log in information of the user is accepted from the input device 14 (step S1001). The control device 11 is in the standby state until judged that the log in information is accepted (step S1001: NO), and if the control device 11 judges that the log in information is accepted (step S1001: YES), the control device 11 starts to store information related to the operation history operated by the user through the input device 14 in the operation history information storage unit 121 of the storage device 12 (step S1002).

The data configuration of the information related to the operation history stored in the operation history information storage unit 121 is similar to the first embodiment. In other words, the operation from the user logs in to the user logs out is stored as operation type, operation date, operation time, and content of operation as the information related to the operation history. The operation history obviously may be stored in correspondence to the user ID, which is information identifying the user who made the operation. The information related to the operation history then can be acquired for every user, and from whose operation the failure occurred can be known.

The period of storing the operation history is not limited to the period from log in to log out, and all the operation history may be stored if the power of the analyzer 1 is turned ON, or the period from a predetermined time to a predetermined time may be arbitrarily set. The failure that has occurred due to that the past operation is not normally completed, for example, that the RAM 13 is not opened may be reproduced.

The control device 11 judges whether or not the failure occurrence information indicating that some kind of failure occurred in the analyzer 1 itself is detected (step S1003). Specifically, judgment is made on whether or not activation of the interruption program that starts the processing when the failure occurred in the hardware arranged in the analyzer 1. If the control device 11 judges that the failure occurrence information is detected (step S1003: YES), the control device 11 stores the detected failure occurrence information in the failure information storage unit 122 of the storage device 12 (step S1004). The control device 11 transmits the information related to the position stored in the position information storage unit 125 through the communication device 17, and various information stored at the position instructed by the information related to the relevant position to the central unit 2 (step S1005).

The data configuration of the failure occurrence information stored in the failure information storage unit 122 is similar to the first embodiment. In other words, the occurrence date and time, or when the failure occurred in the process (sequence) is stored as the information related to the failure. The type of failure is classified by the failure ID, which is information identifying the failure, and is stored in correspondence to an error message output by the interruption program. Thus, the cause of failure if the failure unique to the hardware occurred or the notification that the failure has not occurred if the failure has not occurred can be known.

The data configuration of the information related to the position stored in advance in the position information storage unit 125 is also similar to the first embodiment. In other words, file name 1, file name 2, ..., file name n in which n (n is natural number) information necessary for reproducing the failure is stored are stored as information related to the position in correspondence to a terminal ID, which is information identifying which analyzer (not indispensable). Normally, it is statically set as the source code of the executing program or as definition information of the database, but may be dynamically generated and updated.

The operation history information and the failure occurrence information of required minimum for reproducing the state of the failure can be reliably collected using the information related to the position by storing the information related to the stored position. Therefore, even if the failure occurs at the shipping destination of the analyzer, the collection of information necessary for reproducing the state of the failure to resolve the failure does not require work skill. Thus, even the user at the site can easily and reliably collect the necessary information.

The information necessary for reproducing the state in which the failure occurred can be evacuated to the central unit 2 before the failure occurs at the storage device 12 of the analyzer 1 by transmitting the information related to the stored position, and various information stored at the position instructed by the information related to the relevant position to the central unit 2, so as to be useful in analyzing the cause that leads to triggering of the hard disc failure even if the storage device 12 itself is damaged by the hard disc failure and the like.

The information related to the position is not limited to the file name identifying the file, the folder name identifying the folder, and the like, and may be pointer information indicating address. For instance, an icon and the like linked with the readout application of the file and the like is displayed and output on the output device (display device) 25 of the central unit 2, so that the information stored at the position instructed by the information related to the position is transmitted from the analyzer 1 and stored in the storage device 22 of the central unit 2 by double clicking the icon with the input device 24 such as a mouse.

Returning to Fig. 10, the control device 11 skips step S1004 and advances the process to step S1005 if the control device 11 judges that the failure occurrence information is not detected (step S1003: NO).

The control device 11 judges whether or not the log out information of the user is accepted from the input device 14 (step S1006). If the control device 11 judges that the log out information is not accepted (step S1006: NO), the control device 11 returns the process to step S1003 and repeats the above process. The control device 11 terminates the process if judging that the log out information is accepted (step S1006: YES).

The information for reproducing the state in which the failure occurred is not limited to the operation history information and the failure occurrence information. For instance, authority information is necessary to reproduce the failure such as operation defect that has occurred due to that the user whose access authority is not justified logs in and performs the operation. Therefore, the information related to the position stored with the authority information is stored in the position information storage unit 125 in advance, and the authority information is stored in the authority information storage unit 123 of the storage device 12.

The data configuration of the authority information stored in the authority information storage unit 123 is similar to the first embodiment. In other words, whether or not the password and the user ID are valid, the validated date, the update date and the like are stored as the authority information in correspondence to the user ID identifying the user who logs in. Furthermore, the range of process executable according to the user ID can be identified by storing in correspondence to the user group whose access authority of the process is defined, which is useful in identifying the cause when the failure based on the access authority occurs.

When the state in which the failure occurred is reproduced, information related to the measurement result, which is the result itself measured for the object in the measurement device under a predetermined condition to check whether or not the measurement conditions match, may be stored. The information related to the position stored with the information related to the measurement result may be stored in the position information storage unit 125 in advance, and the information related to the measurement result may be stored in the measurement result information storage unit 124 of the storage device 12 for every measurement.

The data configuration of the information related to the measurement result stored in the measurement result information storage unit 124 is also similar to the first embodiment. In other words, as the information related to the measurement result, the actual measurement value is stored in correspondence to the sample information related to the sample to be analyzed and the measurement condition information related to the measurement condition. When the state in which the failure occurred is reproduced, judgment may be made that the state cannot be accurately reproduced if a large difference is created in the measurement value itself, and the check on the reproducibility of the state can be carried out.

With respect to the authority information and the information related to the measurement result as well, the authority information and the information related to the measurement result necessary for reproducing the state of the failure may be reliably collected using the information related to the position by storing the information related to the stored position. Therefore, even if the failure occurs at the shipping destination of the analyzer, the collection of information necessary for reproducing the state of the failure to resolve the failure does not require work skill. Thus, even the user at the site can easily and reliably collect the necessary information.

Therefore, the necessary information can be collected without omission by using the information related to the position stored with the information necessary for reproducing the state in which the failure occurred. The information may be intensively stored in the storage device 22 of the central unit 2 instead of the analyzers 1, 1, ..., so that even if the hardware failure occurs at the analyzer 1, the information will not be lost, and the cause that triggered the hardware failure can be estimated by analyzing the operation history information, the information related to the failure and the like collected in advance.

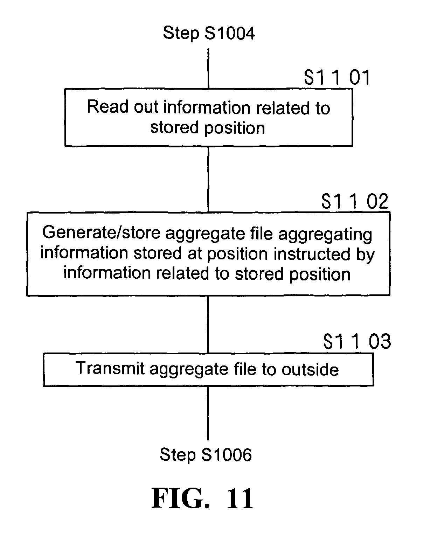

The plurality of information instructed by the information related to the stored position may be intensively stored as one aggregate information. Fig. 11 is a flowchart showing processing procedures of the control device 11 of the analyzer 1 according to the second embodiment of the present invention. Same reference numbers are denoted for the processes common with Fig. 10, and the detailed description will be omitted.

In Fig. 11, the control device 11 of the analyzer 1 reads out the information related to the position stored in the position information storage unit 125 after the process of step S1004 (step S1101), copies and aggregates each information stored at the instructed position, and then generates one aggregate file and stores the same (step S1102). The control device 11 transmits the generated aggregate file to the central unit 2 through the communication device 17 (step S1103), and returns the process to step S1006.

Similar to mirroring, by separately generating the aggregate file, the operation and the like having a high possibility of being the cause that triggers the failure can be identified even if the hardware failure occurs. With one aggregate file, the backup of the information necessary for reproducing the failure can be acquired by copying to an external portable recording medium through the auxiliary storage device 16.

Furthermore, by transmitting the aggregate file to the central unit 2 through the communication device 17, the operation and the like having a high possibility of being the cause that triggers the failure can be identified based on the backup file acquired in the past and stored in the storage device 2 even if the information necessary for reproducing the failure in the storage device 12 such as hard disc failure cannot be acquired. The backup of the information necessary for reproducing the failure can be acquired by copying the aggregate file to the portable recording medium 91 through the auxiliary storage device 26, and the information necessary for reproducing the failure can be delivered even if the failure occurred at the network 3.

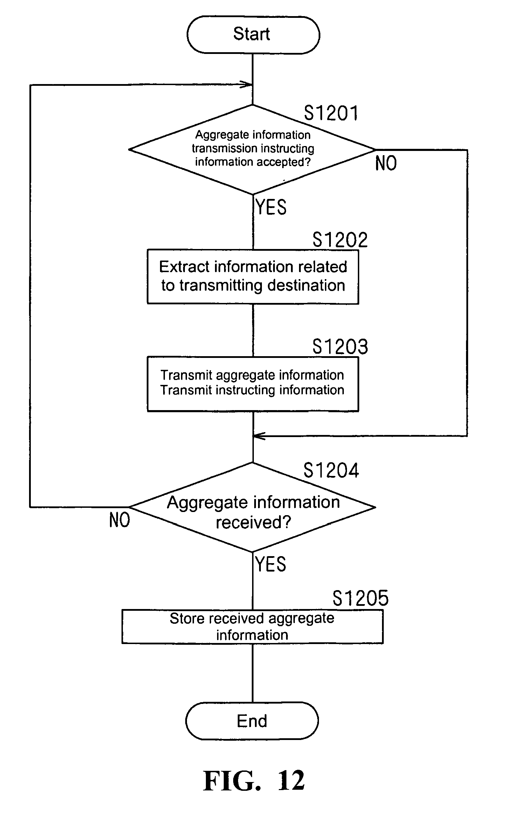

The timing of generating the aggregate information is not limited to the time point the failure occurred, and may be at an arbitrary time point of accepting the instructing information by the user through the input device 24 of the central unit 2. Fig. 12 is a flowchart showing a processing procedure for collecting the aggregate information of the control device 21 of the central unit 2 in the analyzing system according to the second embodiment of the present invention.

The control device 21 of the central unit 2 judges whether or not aggregate information transmission instructing information instructing the transmission of the aggregate information is accepted (step S1201). If the control device 21 judges that the aggregate information transmission instructing information is accepted (step S1201: YES), the control device 21 extracts information related to the transmitting destination from the accepted aggregate information transmission instructing information (step S1202), transmits the aggregate information transmission instructing information to the analyzer 1 having the information related to the extracted transmitting destination as the address (step S1203), and advances the process to step S1204.

The aggregate information transmission instructing information is stored with information related to the transmitting destination of the aggregate information transmission instructing information, that is, information identifying the analyzer 1 in which the aggregate information is stored. This is because in the case of being broadcast communication without identifying the transmitting destination, the communication load increases if great number of analyzers 1, 1, ... are connected to the central unit 2 by way of the network 3. The information related to the transmitting destination is not particularly limited as long as the transmitting destination can be identified such as network ID of the analyzer 1, being the transmitting destination, logical address such as terminal ID, MAC address of the communication device 17, 17, ... being the network connecting unit, and the like in addition to the IP address of the transmitting destination.

If the control device 21 judges that the aggregate information transmission instructing information is not accepted (step S1201: NO), the control device 21 judges whether or not the aggregate information is received (step S1204). If the control device 21 judges that the aggregate information is not received (step S1204: NO), the control device 21 returns the process to step S1201, and repeats the above-described processes.

If the control device 21 judges that the aggregate information is received (step S1204: YES), the control device 21 stores the received aggregate information in the storage device 22 (step S1205).

Therefore, the aggregate information can be acquired as backup at the arbitrary time point before the hardware failure occurs in the analyzer 1, and the operation history information, the information related to the failure and the like collected beforehand are analyzed to estimate the cause that triggered the hardware failure.

In the second embodiment as well, the analyzer 1 may be integral, or may be configured by the measurement device for acquiring the measurement value of the analyzing object, and the analyzer 1 for analyzing the measurement value, the respective devices being connected so as to be able to transmit or receive data.

The first and second embodiments merely illustrate examples, and various modifications and replacements can be made within a scope not deviating from the concept of the invention, and it should be recognized that application can be easily made not only to analyzers but also to various measurement equipments capable of measuring the measurement value and analyzing the measurement value.

The central unit 2 receives the aggregate file transmitted from the analyzer 1 in the second embodiment, but the analyzer 1 may transmit the information stored at the position instructed by the information related to the stored position to the central unit 2 in step S1102, and the central unit 2 may aggregate such received information and create the aggregate file.

## Claims

1. An analyzer for accepting an operation input of a user and analyzing an object, comprising:
a measuring section for measuring the object; and
a controller, wherein the controller includes a memory under control of a processor, the memory storing instructions enabling the processor to carry out operations, comprising:
(a) storing information related to a position to which information related to an operation history of the user is stored;
(b) storing information related to a position to which information related to failure is stored;
(c) storing the information related to the operation history of the user; and
(d) storing the information related to the failure of the analyzer.

2. The analyzer according to claim 1, wherein the instructions further comprise:
(e) storing information related to a position to which information related to operation authority; and
(f) storing the information related to the operation authority of the user.

3. The analyzer according to claim 1 or 2, wherein the instructions further comprise:
(g) storing information related to a position to which information related to a measurement result is stored; and
(h) storing the information related to the measurement result of the object.

4. The analyzer according to any one of claims 1 to 3, wherein the information related to the operation history is the information related to the operation history corresponding to a period from log in to log out of the user.

5. The analyzer according to any one of claims 1 to 4, wherein (c) comprises a step of storing the information related to the operation history and information identifying the user in correspondence to each other.

6. The analyzer according to any one of claims 1 to 5, wherein the instructions further comprise:
copying plural information and storing as one aggregate information based on position information stored in (a) and (b).

7. The analyzer according to claim 6, wherein the instructions further comprise:
transmitting the aggregate information stored in (i) to an outside.

8. The analyzer according to claim 6 or 7, wherein the instructions further comprise:
accepting an instruction to transmit the aggregate information stored in (h) to the outside.

9. An analyzing system comprising:
an analyzers for accepting an operation of a user and analyzing an object; and
a computer system;
wherein the analyzer and the computer system are connected enabling data communication; and the respective analyzer comprises:
a controller including a memory under control of a processor, the memory storing instructions enabling the processor to carry out operations, comprising:
(a) storing information related to a position to which information related to an operation history of the user is stored;
(b) storing information related to a position to which information related to failure is stored;
(c) storing the information related to the operation history of the user;
(d) storing the information related to the failure of the analyzer; and
(e) transmitting the information stored in (c) and (d) to the computer system.

10. The analyzing system according to claim 9,
wherein the instructions further comprise:
(f) storing information related to a position to which information related to operation authority in (a); and
(g) storing the information related to the operation authority of the user;
Wherein (e) comprises a step of transmitting the authority information stored in (g) to the computer system.

11. The analyzer system according to claim 9 or 10,
wherein the instructions further comprise:
(h) storing information related to a position to which information related to a measurement result is stored; and
(i) storing the information related to the measurement result of the object;
Wherein (e) comprises a step of transmitting the information related to the measurement result stored in (i) to the computer system.

12. The analyzing system according to any one of claims 9 to 11, wherein the information related to the operation history is the information related to the operation history corresponding to a period from log in to log out of the user.

13. The analyzing system according to any one of claims 9 to 12, wherein (c) comprises a step of storing the information related to the operation history and information identifying the user in correspondence to each other.

14. The analyzing system according to any one of claims 9 to 13, wherein the instructions further comprise:
(j) copying plural information and storing as one aggregate information based on position information stored in (a) and (b).

15. A computer program product executable on an analyzer for accepting an operation input of a user and analyzing an object, comprising:
a computer readable medium; and
instructions, on the computer readable medium, adapted to enable a general purpose computer to perform operations, comprising:
(a) storing information related to a position to which information related to an operation history of the user is stored;
(b) storing information related to a position to which information related to failure is stored;
(c) storing the information related to the operation history of the user; and
(d) storing the information related to the failure of the analyzer.
